# EUROPÄISCHE PATENTANMELDUNG

(11) **EP 3 460 307 A1**
(43) Veröffentlichungstag der Anmeldung: **27.03.2019**
(21) Anmeldenummer: 18193754.1
(22) Anmeldetag: 11.09.2018
(51) Int. Cl.: F16L 23/08, F16L 23/18

(54) **PROFILSCHELLE MIT DICHTELEMENT**

(30) Priorität: 22.09.2017 DE 102017121994
(71) Anmelder: NORMA Germany GmbH, 63477 Maintal (DE)
(72) Erfinder: Wu, Shuqian, Nantong, Chongchuanqu, Jiangsu 226000 (CN); Henrich, Detlef, 63694 Limeshain (DE); Coufal, Tomas, 664 48 Moravany (CZ); Lenz, Michael, 61137 Schöneck (DE)
(74) Vertreter: Patentanwälte Olbricht Buchhold Keulertz

(57) **Zusammenfassung**

Profilschelle (10) mit einem Schellenband (11) mit zwei Spannbacken, die über eine Spannvorrichtung (12) miteinander verbunden sind, wobei das Schellenband zwei Bandhälften (13a,b) aufweist, die über einen Verbindungsabschnitt (14) flexibel miteinander verbunden sind und wobei in dem Schellenband (11) ein ringförmiges Dichtelement (20) angeordnet ist, welches eine äußere Umfangsfläche (22) aufweist. Das Dichtelement (20) weist mindestens ein Clipelement (21) auf, wobei das mindestens ein Clipelement (21) benachbart zum Verbindungsabschnitt (14) das Schellenband (11) umgreift.

## Beschreibung

Die vorliegende Erfindung betrifft eine Profilschelle mit einem Schellenband, das einen Spannkopf mit zwei Spannbacken aufweist, wobei in dem Schellenband ein ringförmiges Dichtelement angeordnet ist, welches an einem inneren Rand Positionierungslaschen aufweist, wobei das Dichtelement an einem äußeren Rand mindestens einen Vorsprung aufweist, der im Bereich einer Ausnehmung des Schellenbands angeordnet ist.

Im Folgenden werden die Begriffe "Rohr" und "Schlauch" bzw. "Rohrende" und "Schlauchende" äquivalent verwendet.

### STAND DER TECHNIK

Profilschellen sind beispielsweise zum fluiddichten Verbinden von zwei axial aneinander anliegenden Rohr- oder Schlauchenden vorgesehen, die üblicherweise radial nach außen gerichtete Verbindungsflansche haben. Die Profilschelle wird dann auf die entsprechenden Flansche aufgesetzt, wobei durch Spannen der Profilschelle radiale und axiale Haltekräfte eingebracht werden. Das Schellenband weist dazu in der Regel einen V- oder U-förmigen Querschnitt auf.

Um eine fluiddichte Verbindung zu erreichen, wird häufig ein Dichtelement eingesetzt, welches axial zwischen den Verbindungsflanschen der Rohrenden positioniert wird. In der Regel müssen dabei mindestens zwei unabhängige Bauteile verwendet und gehandhabt werden, nämlich die Profilschelle auf der einen Seite und das Dichtelement auf der anderen. Das hat zur Folge, dass der Einbau der Profilschelle relativ kompliziert ist. Ein Monteur muss dann gleichzeitig das Dichtelement und die Profilschelle bezüglich der Rohre korrekt positionieren.

Aus der US 9,016,731 B2 ist beispielsweise eine Profilschelle zum Verbinden von Rohren oder Schläuchen bekannt, die ein ringförmiges Dichtelement aufweist, dessen radial innerer Rand mindestens eine Positionierungslasche aufweist und dessen radial äußerer Rand mindestens einen Vorsprung aufweist. Diese Ausgestaltung ermöglicht eine erste Vorpositionierung bezüglich eines Schlauch- oder Rohrendes während der Vormontage.

Eine ähnliche Schelle wird in DE 10 2011116 768 A1 beschrieben. Dort wird eine Profilschelle mit einem Spannelement und einem Dichtungselement gezeigt, wobei das Dichtungselement auf einer radialen Außenseite angeordnete, elastisch verformbaren Abstandshalter aufweist. Die Schelle weist außerdem ein Schellenband auf, in welchem das Dichtelement liegt. Dabei können die elastisch verformbaren Abstandshalter des Dichtelements an einer Innenseite des Schellenbands anliegen.

### OFFENBARUNG DER ERFINDUNG

Der Erfindung liegt nun die Aufgabe zugrunde, eine Profilschelle mit einem Dichtelement bereitzustellen, die mit geringem Aufwand herzustellen ist und dennoch eine einfache und zuverlässige Fixierung des Dichtelements am Profilband gewährleistet. Außerdem soll ein Verbinden von Rohrenden mit Hilfe der Profilschelle mit geringem Aufwand möglich sein.

Hauptmerkmale der Erfindung sind im kennzeichnenden Teil des Hauptanspruchs angegeben. Ausgestaltungen sind Gegenstand der Ansprüche 2 bis 9.

Bei einer Profilschelle mit einem Schellenband, die eine Spannvorrichtung mit zwei Spannbacken aufweist, wobei das Schellenband zwei Bandhälften aufweist, die über einen Verbindungsabschnitt flexibel miteinander verbunden sind und wobei in dem Schellenband ein ringförmiges Dichtelement angeordnet ist, welches eine äußere Umfangsfläche aufweist, ist erfindungsgemäß vorgesehen, dass das Dichtelement mindestens ein Clipelement aufweist, wobei das mindestens eine Clipelement benachbart zum Verbindungsabschnitt das Schellenband umgreift. Diese Ausgestaltung ermöglicht eine verliersichere Fixierung des Dichtelements am Schellenband. Beim Spannen der Profilschelle verringert sich zwar der Durchmesser der Profilschelle, die Position des Verbindungsabschnitts bezüglich der Rohrenden bleibt aber unverändert. Demnach kann auch das relativ zum Verbindungsabschnitt fixierte Dichtelement während des Spannens an seiner Position verbleiben und das Clipelement auch relativ einfach aufgebaut sein. Dabei hat die Verwendung des Clipelements zur Folge und zum Vorteil, dass es zum Einbringen des Dichtelements in die Profilschelle keinerlei Werkzeuge bedarf. Somit kann auch bei der Vormontage der Profilschelle an einen Rohrflansch auf spezielles Werkzeug verzichtet werden. Der flexible Verbindungsabschnitt kann außerdem als stoffschlüssiges Gelenk ausgebildet sein oder ein zusätzliches Element umfassen, das die Bandhälften flexibel miteinander verbindet. Ferner kann das Clipelement einstückig mit dem Dichtungselement ausgebildet sein.

Eine vorteilhafte Weiterbildung sieht vor, dass die Umfangsfläche des Dichtelements einen radial inneren Rand und einen radial äußeren Rand aufweist, wobei die Umfangsfläche zwischen dem radial inneren Rand und dem radial äußeren Rand im Wesentlichen geneigt zur Axialrichtung ausgebildet ist. Ein derartig ausgebildetes Dichtelement lässt sich leichter und mit wenig Aufwand in die Öffnung eines der zu verbindenden Rohrenden einführen. Außerdem kann sich das zur Axialrichtung geneigte Dichtelement beim Verspannen der Profilschelle zwischen der Außenwand des einen Rohrendes und der Innenwand des jeweils anderen Rohrendes plastisch verformen, wodurch die Abdichtung an der Verbindungsstelle der beiden Rohre verbessert wird. Es kann ferner vorgesehen sein, dass die Umfangsfläche eine Sicke aufweist, wodurch ihre Stabilität erhöht wird. Außerdem kann über die Sicke die Dichtfähigkeit des Dichtelements verbessert werden.

Eine vorteilhafte Ausführungsform sieht am radial inneren Rand der Umfangsfläche mindestens eine Lasche vor, die sich im Wesentlichen in Axialrichtung erstreckt. Die Lasche ermöglicht es, das Dichtelement und damit die Profilschelle relativ zu einem der Rohrenden zu positionieren bzw. zu zentrieren. Somit wird ein Verbinden der beiden Rohrenden vereinfacht. Dabei kann beispielsweise angedacht sein, dass die Profilschelle mitsamt ihrem Dichtelement an einem Rohrende vorbefestigt ist. Die mindestens eine Lasche des Dichtelements dient dann als eine Art Führung, anhand derer das Dichtelement und somit die Profilschelle zentrisch am Rohrende positioniert werden können. Nach Montage des anderen Rohres verhindert die mindestens eine Lasche außerdem beim Spannen der Profilschelle ein Verdrehen des Dichtelements und somit der Profilschelle selbst. Die mindestens eine Lasche kann außerdem zweigeteilt ausgebildet sein und in zum Mittelpunkt des Dichtelements geneigt sein. Ferner ist es möglich, dass die Lasche zum Beispiel zackenförmig sein kann. Derartige Laschen verstärken die Verbindung zwischen den Rohrenden. Wird nämlich das Dichtelement zwischen den beiden Rohrenden durch Spannen der Profilschelle eingeklemmt, so kann es derart elastisch verformt werden, dass die Laschen gegen die Innenwand eines der Rohrenden gedrückt werden. Dadurch entsteht insbesondere bei zackenartigen Laschen eine zusätzliche Fixierung des Dichtelements im Bereich zwischen den beiden Rohren. Daraus resultiert eine insgesamt höhere Stabilität und Dichtigkeit der Verbindung. Ferner kann die mindestens eine Lasche einstückig mit dem Dichtungselement ausgebildet sein.

Ein Variante der Erfindung sieht vor, dass die mindestens eine Lasche stufenförmig gebogen ist. Dabei ist die mindestens eine Lasche nach einer besonders bevorzugten Variante in Radialrichtung gebogen. Durch die stufenförmig gebogene Form der mindestens einen Lasche ergibt sich der Vorteil, dass das Dichtelement eine erhöhte Haltekraft aufweist, wenn es an ein Rohrende befestigt wird. Die mindestens eine Lasche ist außerdem bei der Montage zweier Rohrenden zwischen den beiden Flanschen der Rohrenden positioniert. Weist die Lasche nun eine stufenförmig gebogene Form auf, wird sie beim Verbinden der beiden Rohrenden flachgedrückt. Dadurch entsteht eine zusätzliche Haltekraft, wodurch ein Verdrehen des Dichtelements und somit der Profilschelle verhindert wird. Eine Profilschelle mit stufenförmig gebogener Lasche muss somit beispielsweise nicht mehr mit der Hand festgehalten werden, um ein Verdrehen während des Spannvorgangs zu verhindern.

Es kann außerdem von Vorteil sein, wenn das Clipelement am radial äußeren Rand der Umfangsfläche angebracht ist, wobei es zumindest teilweise über die Umfangsfläche des Dichtelements zurückgebogen ist. Ein derart ausgestaltetes Clipelement kann das Dichtelement zuverlässig am Schellenband halten. Dadurch, dass das Clipelement zunächst teilweise über die Umfangsfläche zurückgebogen ist, kann es das Schellenband besser umgreifen. Das Umgreifen kann dabei zum Beispiel ein Klemmen oder Stecken sein.

Konstruktiv ist es günstig, dass das Dichtelement am radial äußeren Rand mindestens einen radial und axial nach außen abstehenden Fixierer aufweist. Der oder die Fixierer können insbesondere einstückig mit dem Dichtelement ausgebildet sein und unterstützen die Vorfixierung des Dichtelements durch das Clipelement auf vorteilhafte Weise, indem sie das Schellenband ebenfalls umgreifen. Dadurch wird einem Verrutschen oder Verwackeln des Dichtelements relativ zur Schelle entgegengewirkt. Dabei sind die Fixierer entweder ausreichend elastisch verformbar, um ein Spannen der Profilschelle zu erlauben, oder sie lösen sich beim Spannen der Profilschelle vom Schellenband.

Ein besonderer Vorteil ergibt sich daraus, dass der mindestens eine Fixierer einen ersten Fixierabschnitt und einen zweiten Fixierabschnitt ausbildet. Die Ausgestaltung des mindestens einen Fixierers in zwei Abschnitte ist förderlich, weil der Fixierer dadurch zum einen das Dichtelement am Schellenband unterstützend fixieren und zum anderen eine unterstützende Klemmfunktion beim Verbinden jeweils eines Rohrendes mit der Profilschelle einnehmen kann.

Dabei ist vorgesehen, dass das Dichtelement durch den Fixierer an der Profilschelle gehalten ist, wobei der erste Fixierabschnitt das Schellenband formschlüssig umgreift. Der erste Fixierabschnitt des Fixierers kann dazu derart ausgestaltet sein, dass seine Form im Wesentlichen der Form der Umfangsfläche des Schellenbands entspricht. Hierdurch kann der erste Fixierabschnitt das Schellenband formschlüssig und nahezu vollständig umgreifen. Eine erhöhte Stabilität der Verbindung aus Dichtelement und Schellenband ist die Folge.

Durch eine alternative Ausgestaltung wird das Dichtelement durch den Fixierer an der Profilschelle gehalten, wobei der erste Fixierabschnitt ein Schraubenelement der Spannvorrichtung formschlüssig umgreift. Hierbei ist der erste Fixierabschnitt des Fixierers derart ausgebildet, dass seine Form im Wesentlichen dem Umfang des Bolzens oder Stifts des Schraubenelements der Spannvorrichtung entspricht. Im Allgemeinen bedeutet das also, dass ein solcher erster Fixierabschnitt eine Hakenform aufweist. Der insbesondere hakenförmige erste Fixierabschnitt kann somit das Schraubenelement der Spannvorrichtung im Bereich des Gewindebolzens formschlüssig umgreifen. Zur Erhöhung Flexibilität des Fixierers und somit zum Ausgleichen einer beim Spannen der Profilschelle auftretenden Durchmesserverringerung der Profilschelle, kann der Fixierer im Bereich seines zweiten Abschnitts von der Umfangsfläche des Dichtelements in axialer Richtung wegzeigen. Hierdurch wird eine Federwirkung erreicht, was zur Folge hat, dass der unter Spannung am Schraubenelement eingehakte Fixierer das Dichtelement und das Schraubenelement mit einer gewissen Federkraft zueinander zieht. Die Stabilität der Verbindung von Dichtelement und Schelle wird also insgesamt verbessert.

Gemäß einer vorteilhaften Ausführungsform ist außerdem vorgesehen, dass das Dichtelement durch den zweiten Fixierabschnitt an einem Rohrende vorpositioniert wird. Hierzu kann der zweite Fixierabschnitt zum Beispiel derart ausgestaltet sein, dass das Rohrende zwischen dem zweiten Fixierabschnitt und der äußeren Umfangsfläche des Dichtelements eingeklemmt wird. Dabei kann die Klemmwirkung, mittels welcher die Profilschelle an das Schlauch- oder Rohrende vorbefestigt wird und welche bereits durch das Zusammenwirken des Schellenbands mit dem Dichtelement entsteht, auf positive Art und Weise durch den zweiten Fixierabschnitt unterstützt werden.

Es ist außerdem konstruktiv günstig, dass der Verbindungsabschnitt des Schellenbands diametral gegenüber der Spannvorrichtung angeordnet ist. Hierdurch werden ein einfaches Aufweiten bzw. Spannen der Profilschelle sowie ein gleichmäßiger Kraftfluss erreicht.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Profilschelle mit einer ersten Ausführungsform eines Dichtelements,
- Fig. 2: eine erste Ausführungsform eines Dichtelement ohne Profilschelle,
- Fig. 3: eine Profilschelle mit einer alternativen Ausführungsform eines Dichtelements,
- Fig. 4: eine alternative Ausführungsform eines Dichtelement ohne Profilschelle
- Fig. 5: eine Profilschelle mit Dichtelement, die zwei Rohre verbindet,
- Fig. 6: einen Längsschnitt durch ein Dichtelement mit einer ersten Ausführungsform einer Lasche und
- Fig. 7: einen Längsschnitt durch ein Dichtelement mit einer alternativen Ausführungsform der Lasche

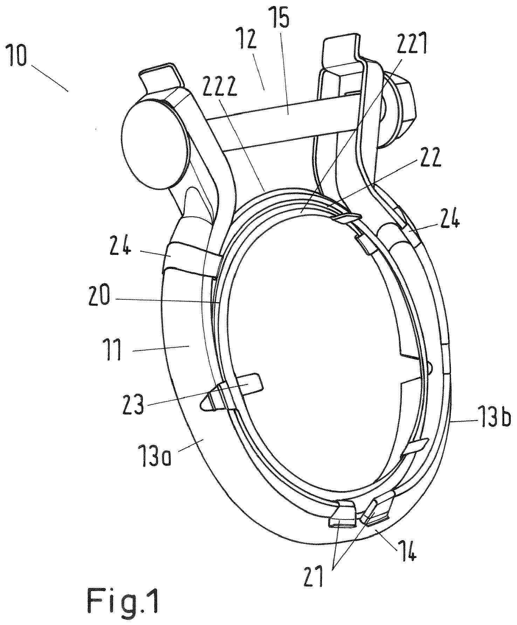

Figur 1 zeigt in perspektivischer Darstellung eine Ausführungsform einer Profilschelle 1 mit einem ringförmigen Dichtelement 20. Die Profilschelle weist eine Schellenband 11 auf, welches aus zwei Bandhälften 13a, 13b aufgebaut ist. Die Bandhälften 13a, 13b sind über einen Verbindungsabschnitt 14 miteinander verbunden. Der Verbindungsabschnitt 14 kann dabei wie in Figur 1 in Form einer Aussparung in Flanken des Schellenbands 11 ausgebildet sein. Die Aussparung bewirkt, dass das Schellenband im Bereich des Verbindungsabschnitts 14 flexibler ist, als im Bereich der Bandhälften 13a, 13b. Das Schellenband 11 aus Figur 1 weist außerdem an jeder Bandhälfte 13a, 13b noch jeweils eine weitere Aussparung in den Flanken auf, welche ebenfalls eine verbesserte Flexibilität des Schellenbandes 11 bewirken.

Das Schellenband 11 weist weiterhin eine Spannvorrichtung 12 auf, welche diametral gegenüber dem Verbindungsabschnitt 14 angeordnet ist. Die Spannvorrichtung 12 nach Figur 1 umfasst zwei Spannbacken, welche jeweils an vom Verbindungsabschnitt abgewandten Enden der beiden Bandhälften 13a, 13b des Schellenbands 11 ausgebildet sind und über ein Schraubenelement 15 mit einander verbunden sind. Durch Spannen der Spannvorrichtung 12 werden die Spannbacken und somit die Bandhälften 13a, 13b zueinander hinbewegt, wodurch der innere Durchmesser der Profilschelle 10 kleiner wird und eine Spannkraft eingebracht wird.

Das in Figur 1 gezeigte Dichtelement 20 sollte möglichst fest und gleichzeitig biegbar ausgebildet sein und könnte zum Beispiel aus einem metallischen Material wie Blech oder dergleichen hergestellt sein. Das Dichtelement 20 weist eine Umfangsfläche 22 auf, welche zwischen einem radial inneren Rand 221 einem ihrem radial äußeren Rand 222 im Wesentlichen geneigt zur Axialrichtung ausgebildet ist. Das Dichtelement 21 ist somit bereits an den in der Regel geneigten Flansch an den Rohrenden 30a, 30b angepasst. Außerdem kann sich das zur Axialrichtung geneigte Dichtelement 20 beim Verspannen der Profilschelle 10 zwischen der Außenwand des einen Rohrendes 30 und der Innenwand des anderen Rohrendes 30 verformen, wodurch die Dichtfähigkeit der Profilschelle an der Verbindungsstelle der beiden Rohre verbessert wird.

Das Dichtelement 20 wird im Schellenband 11 der Profilschelle 10 derart gehalten, dass das Schellenband 11 das Dichtelement 20 umgibt. Derweil ist der Außendurchmesser des ringförmigen Dichtelements 20 größer als der Innendurchmesser des Schellenbands 11 an seiner engsten Stelle. Damit das Dichtelement 20 in im Schellenband 11 gehalten werden kann, weist das Dichtelement 20 im Falle der in Figur 1 gezeigten Profilschelle 10 an seinem radial äußeren Rand 222 zwei Clipelemente 21 auf, wobei das Dichtelement 20 über die Clipelemente 21 am Schellenband 11 festgeklemmt wird. Bei der Ausführungsform nach Figur 1 ist vorgesehen, dass die Clipelemente 21 das Schellenband 11 benachbart zum Verbindungsabschnitt 14 umgreifen, wobei der Verbindungsabschnitt 14 im gezeigten Fall unmittelbar zwischen den beiden Clipelementen 21 liegt, die Clipelemente 21 das Schellenband 11 also jeweils links und rechts des Verbindungsabschnitts 14 umklammern.

Das in Figur 1 gezeigte Dichtelement 21 weist darüber hinaus an seinem radial inneren Rand 221 drei Laschen 23 auf, welche sich im Wesentlichen in Axialrichtung erstrecken. Dabei sind die Laschen 23 an derselben axialen Seite des Dichtelements 21 ausgeprägt, wie die Clipelemente 21. Die drei Laschen 23 sind außerdem in Umfangsrichtung zueinander in etwa gleich beabstandet. Die Laschen 23 erleichtern das Aufsetzen des Dichtelements 21 und somit der Profilschelle 10 auf ein Rohrende 30, indem sie in das Rohrende 30 eingeführt werden können, wodurch wiederum das Rohrende 30 und die Profilschelle 10 relative zueinander zentriert werden können.

Figur 1 zeigt außerdem zwei am radial äußeren Rand 222 des Dichtelements 21 ausgebildete Fixierer 24, welche das Dichtelement 21 zusammen mit den Clipelementen 21 am Schellenband 11 positionieren. Dabei umgreifen die Fixierer 24 das Schellenband 11 jeweils in Umfangsrichtung links und rechts der Spannvorrichtung 12.

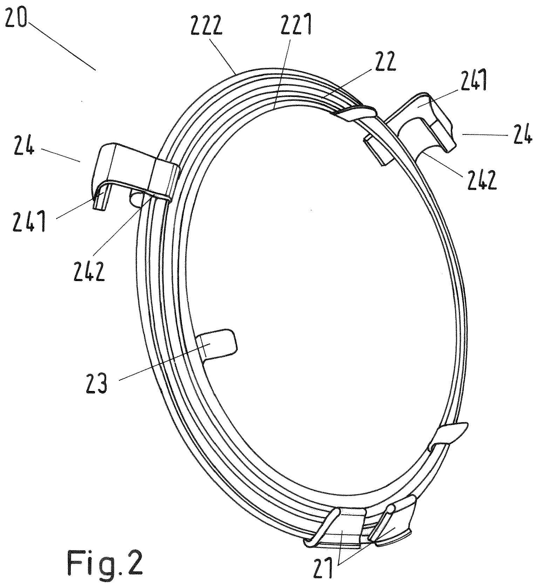

In Figur 2 ist eine perspektivische Darstellung des Dichtelements 20 aus Figur 1 ohne Profilschelle 10 gezeigt. Die Beschreibung des Dichtelements 20 aus Figur 1 trifft auch auf das in Figur 2 gezeigte Dichtelement 20 zu. Allerdings sind durch das Fehlen der Profilschelle 10 in Figur 2 die Fixierer 24 des Dichtelements vollständig sichtbar. Beide Fixierer 24 des Dichtelements 20 sind bei dem in Figur 2 gezeigten Beispiel in einen ersten Fixierabschnitt 241 und einen zweiten Fixierabschnitt 242 unterteilt, wobei der erste Fixierabschnitt 241 das Schellenband 10 umgreift. Dazu entspricht die Form des ersten Fixierabschnitts 241 im Wesentlichen dem Querschnitt des Schellenbands 11. Dadurch wird gewährleistet, dass der erste Fixierabschnitt 241 mit seiner Innenseite formschlüssig an der Außenseite des Schellenbands 11 anliegen kann. Der zweite Fixierabschnitt 242 eines Fixierers 24 ist derart ausgebildet, dass er in ein Rohrende 30a, 30b eingreifen kann. Dadurch wird das Dichtelement 20 und somit die Profilschelle 10 an einem der Rohrenden 30a, 30b vorfixiert. Die Öffnung des zweiten Fixierabschnitts 242 zeigt außerdem im Wesentlichen in dieselbe axiale Richtung, in welcher auch die Laschen 23 ausgebildet sind. Die in den Figuren 1 und 2 dargestellten Fixierer 24 erfüllen eine Doppelfunktion: Sie agieren als zusätzliches Befestigungsmittel des Dichtelements 20 am Schellenband 11 und unterstützen die Verbindung der beiden Rohrenden 30a, 30b miteinander durch eine Verbesserung der Vorfixierung der Profilschelle 10 an je einem der Rohrenden 30a, 30b.

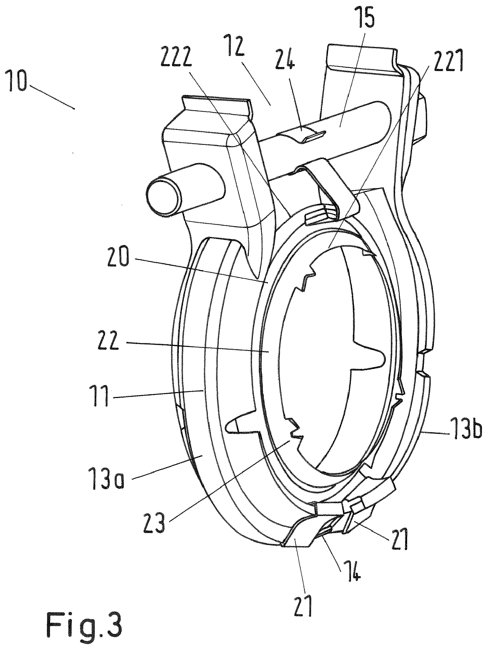

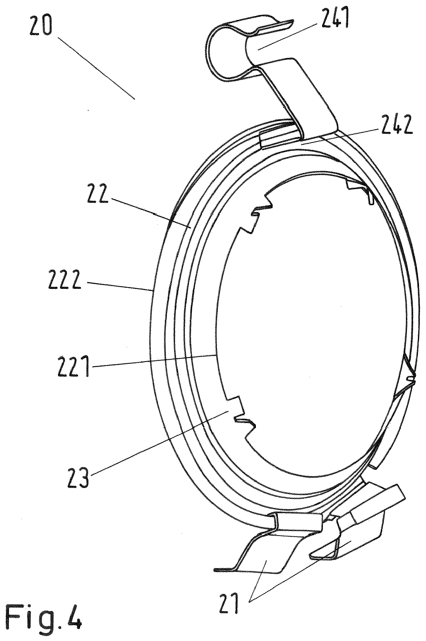

Figuren 3 und 4 zeigen ein Dichtelement 20 in alternativer Ausführungsform, wobei das Dichtelement 20 in Figur 3 in einer Profilschelle gehalten wird. Das in den Figuren 3 und 4 gezeigte Dichtelement 20unterscheidet sich von einem Dichtelement 20 nach der in den Figuren 1 und 2 beschriebenen Ausführung vor allem dadurch, dass im Falle des Dichtelements 20 in Figuren 3 und 4 lediglich ein einzelner Fixierer 24 vorgesehen ist. Der Fixierer 24 ist dabei am radial äußeren Rand 222 des Dichtelements 20 sowie im Wesentlichen diametral gegenüber den Clipelementen 21 angeordnet. Ferner ist der erste Fixierabschnitt 241 des Fixierers 24 hakenförmig ausgebildet.

Das Dichtelement 20 ist in Figur 3 in der Profilschelle 10 angeordnet. Dabei ist das Dichtelement 10 einerseits über seine Clipelemente 21 und andererseits über seinen Fixierer 24 an der Profilschelle 10 vormontiert. Dazu ist vorgesehen, dass der Fixierer 24 über seinen ersten Fixierabschnitt 241 an das Schraubenelement 15 der Spannvorrichtung 12 geklemmt oder gehakt wird, wobei der erste Fixierabschnitt 241 das Schraubenelement 15 zumindest teilweise formschlüssig umgreift.

Das Dichtelement 20 weist an seinem radial inneren Rand 221 Laschen 23 auf, welche im Wesentlichen in eine axiale Richtung zeigen. Die in den 3 Figuren und 4 gezeigten Laschen 23 sind etwas kürzer als die aus Figuren 1 und 2 bekannten Laschen 23. Die Laschen 23 aus den Figuren 3 und 4 sind außerdem zweigeteilt und zackenförmig ausgebildet. Derartige Laschen 23 verstärken die Verbindung zwischen den Rohrenden 30a, 30b. Wird nämlich das Dichtelement 20 zwischen den beiden Rohrenden 30a, 30b durch Spannen der Profilschelle 10 eingeklemmt, so kann es dabei derart verformt werden, dass die Laschen 23 gegen die Innenwand eines der Rohrenden 30a, 30b gedrückt werden. Dadurch entsteht insbesondere aufgrund der zackenförmigen Laschen 23 eine zusätzliche Fixierung des Dichtelements 20 im Bereich zwischen den beiden Rohren, wodurch eine insgesamt höhere Stabilität und Dichtigkeit erzielt wird.

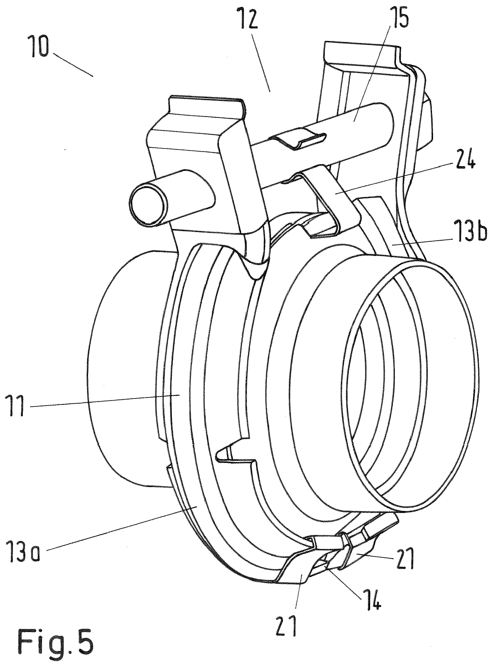

Figur 5 zeigt in perspektivischer Darstellung eine Profilschelle 10 mit Dichtelement 20, welche zwei Rohrenden 30a, 30b über deren Flansche verbindet. Das Dichtelement 20 ist dabei im Wesentlichen identisch zur in den Figuren 3 und 4 gezeigten Variante und wird an dieser Stelle nicht erneut beschrieben. Figur 5 zeigt darüber hinaus, wie eines der Rohrenden 30a, 30b im zweiten Fixierabschnitt 242 des Fixierers 24 aufgenommen wird, wodurch eine Vorfixierung der Profilschelle 10 an diesem Rohrende 30a, 30b ermöglicht wird. Dabei wird der zweite Fixierabschnitt 242 aus der Umfangsfläche 22 des Dichtelements 20 und dem Steg des Fixierers 24 gebildet, welcher vom radial äußeren Rand 222 des Dichtelements 20 in axiale Richtung zeigt. Das Rohrende 30a, 30b wird zur besseren Vorfixierung des Dichtelements 20 beziehungsweise der Profilschelle 10 in diesen zweiten Fixierabschnitt 242 geklemmt.

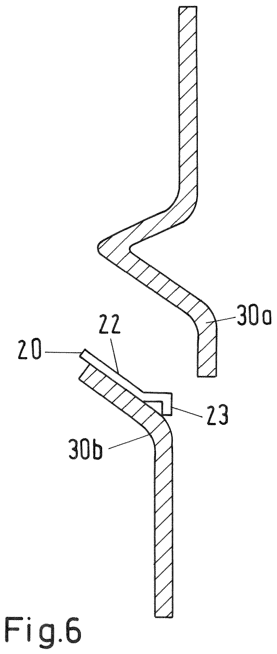

In Figur 6 ist ein Längsschnitt durch ein Dichtelement 20 mit einer ersten Ausführungsform einer Lasche 23 gezeigt. Es sind außerdem zwei zu verbindende Rohrenden 30a, 30b abgebildet, wobei im Falle des in Figur 6 gezeigten Beispiels der äußere Durchmesser des einen Rohrendes 30a an dessen engster Stelle im Wesentlichen einem innere Durchmesser des anderen Rohrendes 30b an dessen engster Stelle entspricht. Zwischen den Durchmessern der beiden Rohrenden 30a,b besteht also nur eine geringe Toleranz. Somit steht beim Verbinden der Rohrenden 30a,b auch nur wenig Raum zur Verfügung, in den sich Teile des Dichtelements 20, wie zum Beispiel die mindestens eine Lasche 23, anordnen könnten. In einem solchen Fall ist es also von Vorteil, wenn das Dichtelement 20 in der Art ausgebildet ist, dass seine Umfangsfläche 22 den Flansch desjenigen Rohrendes 30b nicht überragt, an dem das Dichtelement 20 befestigt ist. Würde die Umfangsfläche 22 den Flansch überragen, würde sie einem passgenauen Verbinden der Rohrenden 30a, 30b entgegenstehen. Dass die Umfangsfläche 22 des Dichtelements 20 den Flansch des Rohrendes 30b nicht überragt, hat wiederum zur Folge, dass auch die mindestens eine Lasche 23 des Dichtelements 20 im Bereich des Flanschs ausgebildet ist. Weil die mindestens eine Lasche 23 in Richtung des Flanschs ragt, wird die Umfangsfläche 22 des Dichtelements 20 mit einer Federkraft vom Flansch weg verformt. Die mindestens eine Lasche 23 wird mit einer entsprechenden Spannkraft an den Flansch gedrückt. Hierdurch der Halt des Dichtelements 20 an dem Rohrende 30b verstärkt.

Beim Verbinden der Rohrenden 30a, 30b wird nun die Umfangsfläche 22 des Dichtelements 20 mitsamt der mindestens einen Lasche 23 zwischen den Flanschen der beiden Rohrenden 30a, 30b eingeklemmt und flachgedrückt. Dies sorgt für eine Erhöhung der Haltekraft des Dichtelements 20 beim Spannen der Profilschelle 10, was einem Verdrehen des Dichtelements 20 und somit der Profilschelle 10 während des Spannvorgangs entgegengewirkt.

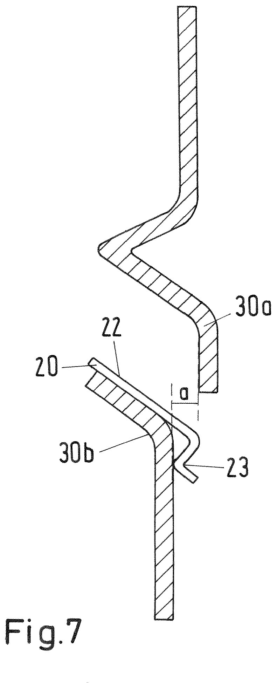

Figur 7 zeigt den Längsschnitt eines Dichtelements 20 mit einer alternativen Ausführungsform einer Lasche 23. Wie in Figur 6 werden außerdem zwei zu verbindende Rohrenden 30a, 30b gezeigt. Bei dem in Figur 7 dargestellten Beispiel ist der äußere Durchmesser des einen Rohrendes 30a an dessen engster Stelle um einen Abstand (a) kleiner als der innere Durchmesser des anderen Rohrendes 30b an dessen engster Stelle - zwischen den Durchmessern der Rohrenden 30a, 30b besteht also Spiel. Bei dem in Figur 7 gezeigten Beispiel überragt die Umfangsfläche 22 des Dichtelements 20 den Flansch desjenigen Rohrendes 30b, an dem das Dichtelement 20 befestigt ist. Dabei überragt die Umfangsfläche 22 den Flansch in der Art, dass die mindestens eine Lasche 23 in den Innenraum des Rohrendes 30b ragt, wobei die mindestens eine Lasche 23 einer Spannkraft gegen die Innenwand des Rohrendes 30b drückt. Dadurch, dass die in Figur 7 gezeigte mindestens eine Lasche 23 stufenförmig gebogen ist, wird die Spannkraft zusätzlich erhöht. Somit wird das Dichtelement 20 an dem Rohrende 30b derart zentrisch positioniert, dass eine Verdrehung des Dichtelements 20 und somit der Profilschelle 10 während der Montage der Rohrenden 30a, 30b weitgehend verhindert wird.

Weil sich, wie in Figur 7 gezeigt, die Durchmesser der Rohrenden 30a, 30b um den Abstand (a) unterscheiden, verbleibt zwischen ihnen ein Raum, in welchen sich die mindestens eine Lasche 23 anordnet. Die mindestens eine Lasche 23 wird dadurch bevorzugterweise zwischen den beiden Rohrenden 30a, 30b eingeklemmt. Die im nicht-eingeklemmten Zustand stufenförmig gebogene Lasche 23 wird durch das Einklemmen flachgedrückt, wodurch die Haltekraft des Clipelements 20 während der Montage der Rohrenden 30a, 30b erhöht wird. Aufgrund der erhöhten Haltekraft wird ein Verdrehen des Clipelements 20 verhindert. Das hat den vorteilhaften Effekt, dass auch die Profilschelle 10 während des Spannvorgangs weitestgehend in Position bleibt und sich nicht verdreht.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Profilschelle
- 11: Schellenband
- 12: Spannvorrichtung
- 13a,b: Bandhälften
- 14: Verbindungsabschnitt
- 15: Schraubenelement

- 20: Dichtelement
- 21: Clipelement
- 22: Umfangsfläche
- 221: radial innerer Rand
- 222: radial äußerer Rand
- 23: Lasche
- 24: Fixierer
- 241: erster Fixierabschnitt
- 242: zweiter Fixierabschnitt
- 30a,b: Rohrenden
- a: Abstand

## Patentansprüche

1. Profilschelle (10), die ein Schellenband (11) mit zwei Spannbacken aufweist, die über eine Spannvorrichtung (12) miteinander verbunden sind, wobei das Schellenband zwei Bandhälften (13a,b) aufweist, die über einen Verbindungsabschnitt (14) flexibel miteinander verbunden sind und wobei in dem Schellenband (11) ein ringförmiges Dichtelement (20) angeordnet ist, welches eine äußere Umfangsfläche (22) aufweist, **dadurch gekennzeichnet, dass** das Dichtelement (20) mindestens ein Clipelement (21) aufweist, wobei das mindestens eine Clipelement (21) benachbart zum Verbindungsabschnitt (14) das Schellenband (11) umgreift.

2. Profilschelle (10) nach Anspruch 1, **dadurch gekennzeichnet, dass** die Umfangsfläche (22) des Dichtelements (20) einen radial inneren Rand (221) und einen radial äußeren Rand (222) aufweist, wobei die Umfangsfläche (22) zwischen dem radial inneren Rand (221) und dem radial äußeren Rand (222) zur Axialrichtung geneigt ausgebildet ist.

3. Profilschelle (10) nach einem der vorherigen Ansprüche, **dadurch gekennzeichnet, dass** am radial inneren Rand (221) mindestens eine Lasche (23) vorgesehen ist, die sich im Wesentlichen in Axialrichtung erstreckt.

4. Profilschelle (10) nach Anspruch 3, **dadurch gekennzeichnet, dass** die mindestens eine Lasche (23) stufenförmig gebogen ist.

5. Profilschelle (10) nach einem der vorherigen Ansprüche, **dadurch gekennzeichnet, dass** das Clipelement (21) vom radial äußeren Rand (222) der Umfangsfläche (22) ausgeht, wobei es zumindest teilweise über die Umfangsfläche (22) des Dichtelements (20) zurückgebogen ist.

6. Profilschelle (10) nach einem der vorherigen Ansprüche, **dadurch gekennzeichnet, dass** das Dichtelement (20) am radial äußeren Rand (222) mindestens einen radial und axial nach außen abstehenden Fixierer (24) aufweist.

7. Profilschelle (10) nach Anspruch 6, **dadurch gekennzeichnet, dass** der mindestens eine Fixierer (24) einen ersten Fixierabschnitt (241) und einen zweiten Fixierabschnitt (242) ausbildet.

8. Profilschelle (10) nach Anspruch 7, **dadurch gekennzeichnet, dass** das Dichtelement (20) durch den Fixierer (24) an der Profilschelle (10) fixiert ist, wobei der erste Fixierabschnitt (241) das Schellenband (11) umgreift.

9. Profilschelle (10) nach Anspruch 8, **dadurch gekennzeichnet, dass** das Dichtelement (20) durch den Fixierer (24) an der Profilschelle (10) fixiert wird, wobei der erste Fixierabschnitt (241) ein Schraubenelement (15) der Spannvorrichtung formschlüssig umgreift.

10. Profilschelle (10) nach einem der vorherigen Ansprüche, **dadurch gekennzeichnet, dass** der Verbindungsabschnitt (14) des Schellenbands (11) diametral gegenüber der Spannvorrichtung (12) angeordnet ist.
